# EUROPEAN PATENT SPECIFICATION

(11) **EP 2 727 659 B1**
(45) Date of publication and mention of the grant of the patent: **29.04.2020**
(21) Application number: 13191092.9
(22) Date of filing: 31.10.2013
(51) Int. Cl.: B08B 3/02, B08B 9/28

(54) **Procedure and apparatus for washing tanks for containing aquatic animals**
Verfahren und Vorrichtung zum Waschen von Behältern für Wassertiere
Procédé et appareil de nettoyage de réservoirs destinés à contenir des animaux aquatiques

(30) Priority: 01.11.2012 US 201261721292 P; 08.08.2013 US 201313962065
(43) Date of publication of application: 07.05.2014
(73) Proprietor: IWT S.r.L., 21020 Casale Litta (IT)
(72) Inventor: Vitali, Michele, 21021 Angera (IT)
(74) Representative: Lualdi, Lorenzo

(56) References cited:
- WO-A1-97/20645
- WO-A1-2009/064856
- WO-A2-99/25489
- US-A- 5 289 837
- US-A1- 2006 042 665
- US-A1- 2011 226 285

## Description

The problem of washing tanks for containing aquatic animals and their accessories (siphons, partitions, filters, etc.) has been dealt with by implementing washing machines already known in the field of washing small cages for containing laboratory animals (typically rodents) with special and appropriate devices adapted to actuate innovative washing cycles which, by using specific detergents and with the imposition of well-defined parameters, are capable of removing algae, residues of fish food, and above all the various types of biofilm that develop on the surfaces of tanks which remain in contact with water for long periods.

The prior art document WO 99/25489 A2 discloses an example of known apparatus suitable for cleaning animal cages and racks and healthcare and scientific equipment, such as hospital beds, wheelchairs, utensils, carts and instrument containers.

The prior art document WO 97/20645 A1 discloses a method for washing returnable beverage bottles which teaches to use a cleaning formulation comprising more than about 0.5 % by weight of an alkaline agent.

Further examples of methods and/or apparatuses for washing tanks for containing aquatic animals are known from prior art documents US 2011/226285 and WO 2009/064856.

Above all, bio-films have been shown to be extremely tenacious and resistant. Their removal ensures that the environment in direct contact with the fish is completely sanitized and free from bacteria and micro-organisms which settle beneath the layer of biofilm itself.

The choice of detergents and the method of use, i.e. the washing cycle actuated by using these detergents, have been determining factors.

According to the present invention there are provided a method according to claim 1 and a washing apparatus according to claim 8.

The procedure according to the present application provides for washing the tanks of aquatic animals by using, in an appropriate washing machine, a solution of alkaline detergent, preferably in aqueous solution at a concentration of 0.8%, in combination with hydrogen peroxide, preferably in a proportion of 30-35%, in 0.5% solution.

The solution of alkaline detergent and hydrogen peroxide in the concentrations described is then placed in the tanks or washing baths of a washing machine, for washing, a solution of water and alkaline detergent and hydrogen peroxide is used in the preferred concentrations indicated.

According to a preferred embodiment as disclosed, the alkaline detergent is an aqueous solution of potassium hydroxide in a proportion of 20-40%.

The washing cycle as disclosed then comprises, after the washing step, a step of neutralization of the detergent, which requires the use of an acid-based product to re-establish the desired pH of the residual of washing solution still present in the washing chamber after the washing phase.

As disclosed, the neutralizing agent is an acid based product. More preferably, the neutralizing agent is an aqueous solution of phosphoric acid in a proportion of 25%.

The chemical products used for the cycle, both the alkali-based ones and the acid ones, must be completely free from surfactants, phosphates and chlorine, all of which products are extremely damaging to the health of fish.

Other parameters which contribute to the optimum result are the washing-cycle times and the temperatures of the washing bath.

Also disclosed is the washing machine capable of actuating the present washing cycle.

In particular, for the purpose of controlling times and temperatures of the wash bath, the washing machine according to the present invention comprises a control panel which controls suitable means for regulating the machine so as to control the wash time and temperature, as well as the concentration values of the detergents mentioned above. The data are transmitted to the PLC controller, which has the task of controlling the cycles completely automatically.

Bath temperatures and wash times can have different values depending on the type and the amount of dirt present on the tanks and their accessories.

Another very important aspect in the development of the washing cycle is the step of "neutralization" and "final rinse".

Neutralization of detergents used in the washing step and non-optimal rinsing, and thus the presence of chemical-product residues on the surfaces of the tanks, is not entirely acceptable in the field of research conducted on fish, constituting a potential risk of disease and mortality, with consequent economic damage and, above all, a deterioration in the results obtainable by the research.

The water present in the tanks, which are hydraulically interconnected, is continuously circulated to filter it. A single tank having significant residues of detergent could contaminate the water in the other tanks connected to the centralized plant, with disastrous consequences.

Hence the need to equip the machines with control systems which can guarantee the replicability of the process developed in the experimental phase to verify the quantities of metered chemical products, both detergents and neutralizers, but also the quantity of water used for the rinsing step.

In particular the rinsing in the washing machine that is the subject of the present invention is carried out using the pressure of the water main which supplies a series of spray nozzles. The quantity of water consumed is determined by the time of the neutralization and rinsing steps and by the mains pressure.

Alternatively, the spray nozzles for rinsing may be supplied by a centrifuge pump supplied from a dedicated tank, therefore the quantity of water used is determined solely by the time of the steps of neutralization and rinsing, the pump pressure being a constant value.

Listed below are the control components which are provided to guarantee actuation of the washing method, ensuring the correct result of washing, neutralization and rinsing of the aquatic cycles, and which distinguish the washing machine from currently known machines.

The washing machine that is the subject of the present application will - for the purpose of actuating the method of washing which itself is a subject of the present application - comprises at least:
- A washing chamber;
- A first supply pump for supplying the alkaline detergent to the washing chamber, with respective flow-meter;
- A second supply pump for supplying the hydrogen peroxide to the washing chamber, with respective flow-meter;
- A third supply pump for supplying the neutralizing agent to said washing chamber, with respective flow-meter.

Owing to the three dedicated pumps, it is possible to administer detergent and neutralizer to the wash bath by controlling, by means of the flow meters, the quantities of detergent and neutralizer administered respectively to the wash bath and the rinse water.

In a possible configuration, the washing machine according to the present application will also comprise:
- A pressure regulator at the inlet of the supply line of the rinsing circuit;
- A pressure switch at the inlet of the supply line of the rinsing circuit;
- A flow meter at the inlet of the supply line of the rinsing circuit.

If during the cycle, the controlled parameters do not correspond to the values stipulated in the formula, the cycle is interrupted.

For further clarification, a diagram is provided of the washing machine that is the subject of the present invention and is adapted to carry out the process according to the present application.

More in particular are presented here, by way of example non-limiting of the present invention, two different types of machine for washing tanks for containing aquatic animals.

The first type of machine, indicated as machine TYPE A, provides for the rinsing circuit to be supplied directly at the pressure of the water main.

The second type of machine, indicated as machine TYPE B, provides for the rinsing circuit to receive pressure from a pump, supplied from a reservoir tank and installed at the edge of the actual machine. The machine type B may more in particular be provided with a single or double washing tank. In the drawings provided here by way of example, a washing machine comprising a single tank is indicated as B1, a machine comprising a double tank is indicated as B2.

Description of the drawings:
Figure 1 shows a scheme of a machine Type A;
Figure 2 shows a scheme of a machine Type B1;
Figure 3 shows a scheme of a machine Type B2.

Regarding the temperatures and the times of the washing steps, as suggested above, these are dependent upon the type and the amount of dirt.

Substantially two cycles are identified, optimized according to the type of washing machine, which are hereinafter illustrated by way of example non-limiting and in relation to the diagram of the washing machine which actuates this treatment.

The said procedures may comprise different steps indicated by the symbols given in the legend below:
W = washing step
R = rinsing step
N = neutralization step
T = transfer of water during the inflow of neutralizing product
E = vapour extraction step

### Washing machine with rinsing circuit directly connected to the water main (machine TYPE A).

**a) In the case of tanks and accessories that are not excessively dirty, the preferred conditions of washing may be, for example, the following:**
   W: 600 sec, at 70°C (158°F)
   N: 15 sec, at 85°C (185°F)
   R: 50 sec, at 85°C (185°F)
   E: 90 sec
   Concentration of alkaline detergent 0.8%
   Concentration of hydrogen peroxide 0.5%
   Neutralizing agent with metering pump output 20 l/h at concentration 0.5%.
**b) In the case of very dirty tanks and accessories with massive presence of bio-film, a high-temperature cycle is opted for, preferred washing conditions:**
   W: 1200 sec, at 85°C (185 °F)
   N: 15 sec, at 85°C (185°F)
   R: 50 sec, at 85°C (185°F)
   E: 90 sec
   Alkaline detergent concentration 0.8%
   Hydrogen peroxide concentration 0.5%
   Neutralizing agent with metering pump output 20 l/h at CONCENTRATION 0.5%

### Washing machine with double washing tank, and rinsing tank fitted with a centrifuge pump (TYPE B2).

The washing cycle is performed using a first washing tank (011W1) with the solution based on alkaline product and hydrogen peroxide and a second washing tank (011W2) with the neutralizer-based solution. After the washing step which uses the solution from the first tank (011W1), a first rinse is carried out with a portion of the water contained in the rinsing tank (011R). This step is followed by the neutralization step contained in the second washing tank (011W2) and finally the definitive rinsing is performed.
a) **In the case of tanks and accessories that are not excessively dirty, the preferred washing conditions may be, for example, the following:**
   W: 480 sec, at 70°C (158°F)
   R1: 15 sec, at 85°C (185°F)
   N: 240 sec at 85°C (185°F)
   R2 : 30 sec, at 85°C (185 °F)
   Alkaline detergent concentration in the first washing tank 0.8%
   Hydrogen peroxide concentration in the first washing tank 0.5%
   Neutralizing solution concentration in the second washing tank 0.5%
**b) In the case of very dirty tanks and accessories with massive presence of bio-film, a high-temperature cycle is opted for, the preferred washing conditions are, for example, the following:**
   W: 1800 sec, at 76.6°C (170°F)
   R1: 15 sec, at 85°C (185°F)
   N: 240 sec, at 85°C (185°F)
   R2: 30 sec, at 85°C (185°F)
   Alkaline detergent concentration in the first washing tank 0.8%
   Hydrogen peroxide concentration in the first washing tank 0.5%
   Neutralizing solution concentration in the second washing tank 0.5%

### Washing machine comprising a single washing tank, and a rinsing tank fitted with a centrifuge pump (TYPE B1).

The cycle is performed using the washing tank (011W1) with the alkaline product-based solution and hydrogen peroxide. Since it is usually used with machines for washing rodent tanks, the neutralization step performed by injecting the neutralizing product directly into the rinsing circuit is too weak, as demonstrated by experimental tests. With a view to improving the achievable result, it would be possible to increase the neutralization time, but this would be very expensive in economic terms due to the considerable consumption of water and neutralizing product. A more effective neutralization was therefore obtained by appropriately modifying the program for controlling the cycle in the way described below.

After the washing step, a defined volume of water from the rinsing tank programmed in prescription is transferred by the pump (301R) to the rinsing nozzles and by the latter to the low part of the machine (reservoir). The neutralizing product too is transferred into the reservoir by the metering pump, in the quantity necessary to obtain the concentration provided for in the prescription. At this point, the pump for transferring the reservoir (see pump 302), which continues to recirculate the neutralizing solution within the washing chamber for a defined time. At the end of this step, the solution present in the reservoir is discharged and the cycle is completed with the final rinsing step.
**a) In the case of tanks and accessories which are not excessively dirty, the preferred washing conditions are the following:**
   W: 480 sec, at 70°C (158°F)
   T: 40 sec, at 85°C (185°F)
   N: 240 sec, at 85°C (185°F)
   R 30 sec 85°C (185°F)
   Alkaline detergent concentration 0.8%
   Hydrogen peroxide concentration in 0.5%
   Neutralizing solution concentration in the reservoir 0.5%
**b) In the case of very dirty tanks with massive presence of bio-film High temperature cycle, preferred washing conditions:**
   W 1800 sec 76.6°C (170°F)
   T 40 sec 85°C (185°F)
   N 240 sec 85°C (185°F)
   R 30 sec 85°C (185°F)
   Alkaline detergent concentration 0.8%
   Hydrogen peroxide concentration in 0.5%
   Neutralizing solution concentration in the reservoir 0.5%

Coming now to the advantages of the machines which actuate the washing process that is the subject of the present invention, the type A machine provides for monitoring of the quantity of water used during the neutralization and rinsing steps is monitored continuously using a device for monitoring the output, in particular a flow meter (701/2).

The flow meter checks that, during each step, the machine is interrogated for the quantity of water charged into the cycle, and also that the output remains constant within a predefined tolerance range. This guarantees that variations in mains pressure do not affect the volumes of water charged into the cycle, a typical technical problem which afflicts machines supplied directly from the water supply mains.

The same is true of the flow meters (701, 701/1) installed on the metering pumps, the task of which is to control the consumption of the chemical products used in the process.

Changes in the ambient temperature many produce even sizable changes in the viscosity of the chemical products and detergents, and therefore an operation of the dose-metering pumps based exclusively on the metering time would not guarantee the replicability of the cycle and of the results. For this reason, a flow meter associated with each metering pump is therefore used, so when the quantity of product necessary for achieving the specified concentration has effectively been reached, as measured by the flow meter, the pump will be stopped by the control unit of the machine.

With the type B washing machine, whether it comprises a single (B1) or double (B2) washing tank, the rinsing circuit comprises a centrifuge pump (301R) for supplying the rinsing circuit itself. Use of the flow meter on the water line is not necessary in this case.

The pump (301R) of the rinsing line in fact supplies a series of rinsing nozzles the output of which is known and is a function of pump pressure, which is a constant. For this type of machine also, however, flow meters are necessary to measure the quantity of detergent and neutralizer supplied by the metering pumps.

The program for controlling the process of washing aquatic tanks, which is controlled by the control unit of the machine, takes into consideration another important phenomenon linked to the use of hydrogen peroxide.

Hydrogen peroxide is known to be unstable, even at the not excessively high temperatures specified for the washing cycles described above. The hydrogen peroxide solution in fact evolves oxygen, which dissolves in air, changing the original concentration.

In the machine for washing small cages for containing laboratory animals, such as for example rodents, the concentrations of the detergents used are restored at the end of the washing cycle. However, this cannot be done in the machines for washing aquatic tanks that are the subject of the present invention, in that the evaporation of oxygen from the hydrogen peroxide also occurs with the machine closed, or for example during periods of machine inactivity between one washing cycle and another. For this reason, if the concentration of the hydrogen peroxide solution is also re-established at the end of the washing cycle, this concentration could be changed at the start of the new cycle.

In order to avoid this drawback, the control unit of the machine is programmed so as to regulate the dosage of the alkaline product and of the hydrogen peroxide only when the operative executes the command to start the cycle from the control panel. In this way there is the certainty that the cycle starts off with the optimal conditions of concentration of the washing solution. This operating logic is applied both to the initial preparation of the washing solution and to restoration of the concentrations after a cycle.

Another specific technical problem which involves machines for washing aquatic tanks that are the subject of the present invention, but does not affect washing machines of the known type which are used for washing tanks of rodents, consists in the stipulation of the variable "gain". This parameter gives the possibility of reinforcing the bath after one cycle with the percentage concentration stipulated in the desired original description, but also with a correction factor called precisely this: "gain". This correction factor takes account of any further dilutions of the concentration of the solution in a particular way for very long washing cycles.

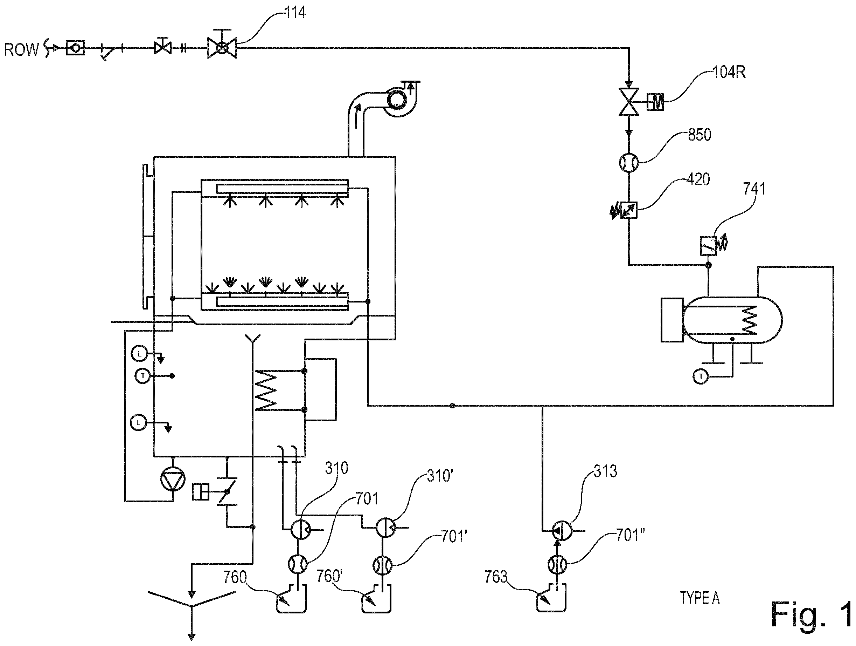

### Indication of the details on Figure 1, washing machine Type A:

- 114: RO water incoming interception valve
- 310': Detergent dosage unit
- 310: Detergent dosage unit
- 313: Neutralizer dosage unit
- 420: Pressure regulator
- 701': Flow meter
- 701": Flow meter
- 701: Flow meter
- 741: Pressure switch
- 760': Minimum detergent level sensor
- 760: Minimum detergent level sensor
- 763: Minimum neutralizer level sensor
- 850: Water meter
- 104R: Rinse RO water incoming pneumatic valve
- ROW: RO water

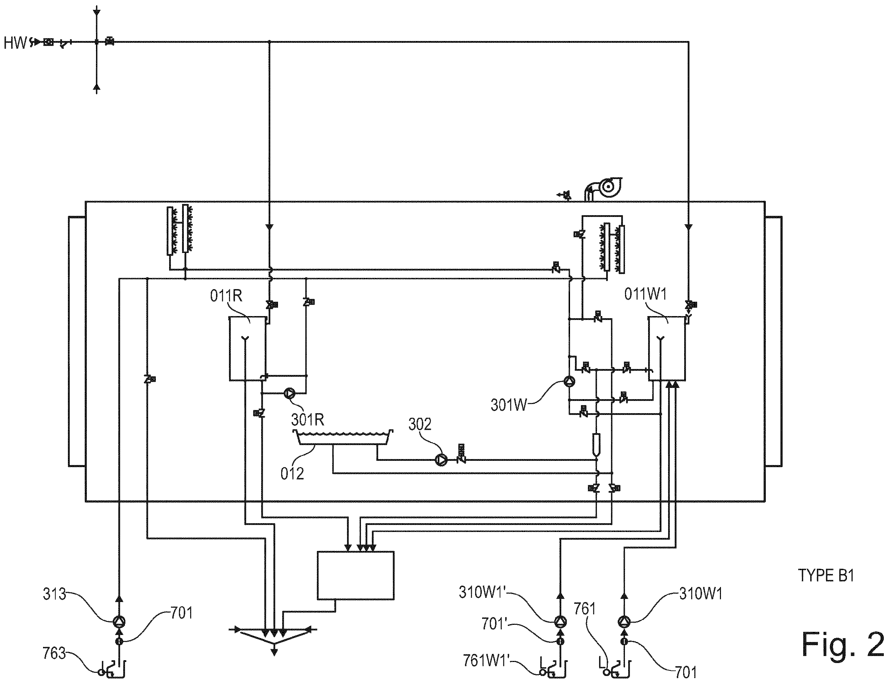

### Indication of the details on Figure 2, washing machine Type B1:

- HW: Softened water
- 011R: Rinse tank
- 011W1: Wash tank
- 012: Water collection tank
- 301R: Rinse pump
- 301W: Wash pump
- 302: Transfer pump
- 310W1: Detergent dosage unit - tank 1 (alkaline detergent)
- 310W1': Detergent dosage unit - tank 1 (Hydrogen peroxyde)
- 313: Neutralizer dosage unit
- 761W1: Minimum detergent level sensor
- 761W1': Minimum detergent level sensor

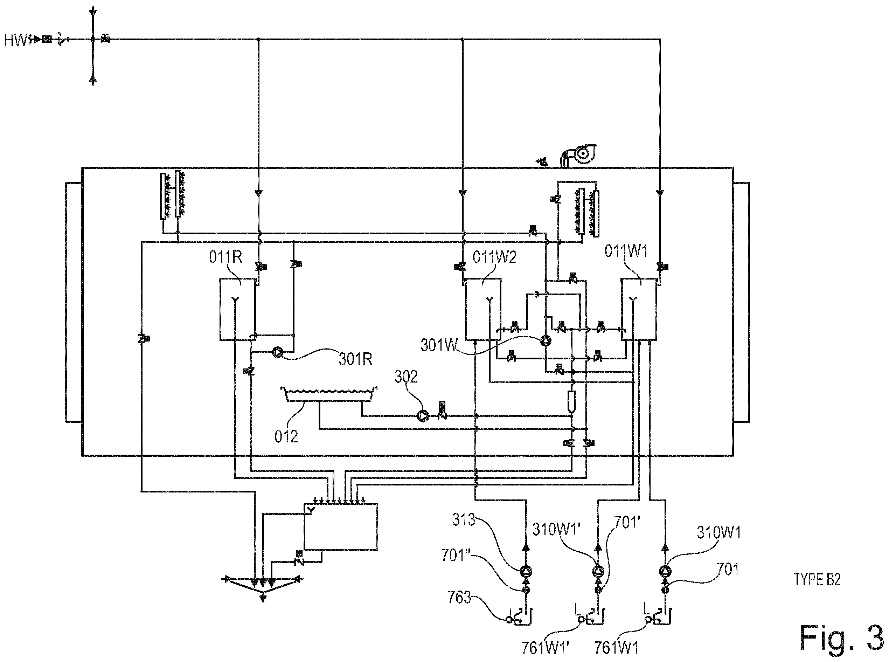

### Indication of the details on Figure 3, washing machine Type B2:

- HW: Softened water
- 011R: Rinse tank
- 011W1: Wash tank 1
- 011W2: Wash tank 2
- 012: Water collection tank
- 301R: Rinse pump
- 301W: Wash pump
- 302: Transfer pump
- 310W1: Detergent dosage unit - tank 1 (alkaline detergent)
- 310W1': Detergent dosage unit - tank 1 (Hydrogen peroxyde)
- 313: Neutralizer dosage unit
- 701: Flow meter
- 701': Flow meter
- 701": Flow meter
- 761W1: Minimum detergent level sensor
- 761W1': Minimum detergent level sensor
- 763: Minimum detergent level sensor

The recited order of processing elements or sequences, or the use of numbers, letters, or other designations therefore, is not intended to limit the claimed processes to any order except as may be specified in the claims. Accordingly, the invention is limited only by the following claims.

## Claims

1. A method for washing one or more tanks for containing aquatic animals, the method comprising:
- inserting one or more tanks for aquatic animals to be washed into a washing chamber of a washing apparatus;
- supplying to the washing chamber a washing solution, the washing solution comprising an alkaline detergent in combination with hydrogen peroxide, the alkaline detergent is free from surfactants, phosphates and chlorine;
- supplying a neutralizing agent to the washing chamber, the neutralizing agent is free from surfactants, phosphates and chlorine to re-establish a desired pH of a residual washing solution in the washing chamber;
- supplying rinsing water to the washing chamber to rinse the tanks.

2. The method for washing tanks for containing aquatic animals according to claim 1, wherein the washing solution is an aqueous solution comprising alkaline detergent at a concentration of 0.8%, in combination with hydrogen peroxide in a proportion of 30-35% in 0.5% solution.

3. The method for washing tanks for containing aquatic animals according to the claim 2, wherein the alkaline detergent is potassium hydroxide.

4. The method for washing tanks for containing aquatic animals according to the claim 3, wherein the alkaline detergent is potassium hydroxide in a proportion of 20-40%.

5. The method for washing tanks for containing aquatic animals according to claim 1, wherein during the washing step the washing solution has a temperature between 60°C and 85°C.

6. The method for washing tanks for containing aquatic animals according to claim 1, wherein during the rinsing step the rinsing water has a temperature of 85°C.

7. The method for washing tanks for containing aquatic animals according to claim 1, wherein during the neutralizing step, the neutralizing agent is at a temperature of 85°C.

8. A washing apparatus for washing tanks for containing aquatic animals according to a method as claimed in one of claims 1 to 6, the apparatus comprising:
- at least a washing chamber into which one or more washing tanks are positioned;
- at least a first supply pump (310W1) for supplying an alkaline detergent to the washing chamber, the first supply pump (310W1) being provided with a first flow-meter (701) for determining the quantity of the alkaline detergent supplied to a washing bath;
- at least a second supply pump (310W1') for supplying hydrogen peroxide to the washing chamber, the second supply pump (310W1') being provided with a second flow-meter (701') for determining the quantity of the hydrogen peroxide supplied to the washing bath;
- at least a third supply pump (313) for supplying neutralizing agent to the washing chamber, the third supply pump (313) being provided with a third flow-meter (701") for determining the quantity of the neutralizing agent supplied, the apparatus further comprising a programmable control unit configured to detect a concentration of the alkaline detergent and of the neutralizing agent in aqueous washing and neutralizing solutions, respectively, in the washing bath in order to restore the concentration at the end of a washing cycle, the programmable control unit of the washing machine being programmed to control one or more of the first supply pump (310W1), the second supply pump (310W1') or the third supply pump (313) on the basis of information provided by the first flow-meter (701), the second flow-meter (701'), or the third flow-meter (701") in order to restore the dosage of the alkaline detergent and the hydrogen peroxide only when an operative executes the command to start the washing cycle from a control panel of the washing apparatus.

9. The apparatus according to claim 8 further comprising a rinsing circuit for rinsing the tanks, the neutralizing agent being supplied to the washing chamber by means of the rinsing circuit.

10. The apparatus according to claim 9 wherein the rinsing circuit further comprises:
- a pressure regulator at an inlet of the supply line of the rinsing circuit;
- a pressure switch (741) at an inlet of the supply line of the rinsing circuit;
- a flow meter at an inlet of the supply line of the rinsing circuit.

11. The apparatus according to claim 8 further comprising a rinsing circuit supplied directly by a water main and at a pressure of the water main.

12. The apparatus according to claim 8 further comprising a rinsing circuit comprising at least one tank (011R) for rinsing water and receiving pressure from a rinsing pump.

## Patentansprüche

1. Verfahren zum Waschen eines oder mehrerer Tanks zur Aufnahme von Wassertieren, wobei das Verfahren umfasst:
- Einsetzen eines oder mehrerer zu waschender Tanks für Wassertiere in eine Waschkammer einer Waschvorrichtung;
- Zuführen einer Waschlösung zu einer Waschkammer, wobei die Waschlösung ein alkalisches Detergens in Kombination mit Wasserstoffperoxid umfasst, wobei das alkalische Detergens frei von oberflächenaktiven Stoffen, Phosphaten und Chlor ist;
- Zuführen eines Neutralisationsmittels zur Waschkammer, wobei das Neutralisationsmittel frei von oberflächenaktiven Stoffen, Phosphaten und Chlor ist, um den gewünschten pH-Wert einer restlichen Waschlösung in der Waschkammer wiederherzustellen;
- Zuführen von Spülwasser zu der Waschkammer, um die Tanks zu spülen.

2. Verfahren zum Waschen von Tanks zur Aufnahme von Wassertieren nach Anspruch 1, wobei die Waschlösung eine wässrige Lösung ist, die ein alkalisches Detergens in einer Konzentration von 0,8% in Kombination mit Wasserstoffperoxid in einem Prozentsatz von 30 bis 35% in 0,5% -iger Lösung umfasst.

3. Verfahren zum Waschen von Tanks zur Aufnahme von Wassertieren nach Anspruch 2, wobei das alkalische Detergens Kaliumhydroxid ist.

4. Verfahren zum Waschen von Tanks zur Aufnahme von Wassertieren nach Anspruch 3, wobei das alkalische Detergens Kaliumhydroxid in einem Prozentsatz von 20 - 40% ist.

5. Verfahren zum Waschen von Tanks zur Aufnahme von Wassertieren nach Anspruch 1, wobei während des Waschschrittes die Waschlösung eine Temperatur zwischen 60 °C und 85 °C aufweist.

6. Verfahren zum Waschen von Tanks zur Aufnahme von Wassertieren nach Anspruch 1, wobei während des Spülschrittes das Spülwasser eine Temperatur von 85 °C aufweist.

7. Verfahren zum Waschen von Tanks zur Aufnahme von Wassertieren nach Anspruch 1, wobei während des Neutralisationsschrittes das Neutralisationsmittel eine Temperatur von 85 °C aufweist.

8. Waschvorrichtung zum Waschen von Tanks zur Aufnahme von Wassertieren gemäß einem Verfahren nach einem der Ansprüche 1 - 6, wobei die Vorrichtung umfasst:
- mindestens eine Waschkammer, in der ein oder mehrere Waschtanks positioniert sind;
- mindestens eine erste Zufuhrpumpe (310W1) zum Zuführen eines alkalischen Detergens zur Waschkammer, wobei die erste Zufuhrpumpe (310W1) mit einem ersten Durchflussmesser (701) zur Bestimmung der Menge des einem Waschbad zugeführten alkalischen Detergens versehen ist;
- mindestens eine zweite Zufuhrpumpe (310W1') zum Zuführen von Wasserstoffperoxid zur Waschkammer, wobei die zweite Zufuhrpumpe (310W1') mit einem zweiten Durchflussmesser (701') zur Bestimmung der Menge des dem Waschbad zugeführten Wasserstoffperoxids versehen ist;
- mindestens eine dritte Zufuhrpumpe (313) zur Zufuhr von Neutralisationsmittel zur Waschkammer, wobei die dritte Zufuhrpumpe (313) mit einem dritten Durchflussmesser (701") zur Bestimmung der Menge des zugeführten Neutralisationsmittels versehen ist, wobei die Vorrichtung ferner eine programmierbare Steuereinheit aufweist, die konfiguriert ist, um eine Konzentration des alkalischen Detergens und des Neutralisationsmittels in wässrigen Wasch- bzw. Neutralisationslösungen im Waschbad zu detektierren, um die Konzentration am Ende eines Waschzyklus wiederherzustellen, wobei die programmierbare Steuereinheit der Waschmaschine so programmiert ist, eine oder mehrere der ersten Zufuhrpumpe (310W1), der zweiten Zufuhrpumpe (310W1') oder der dritten Zufuhrpumpe (313) auf der Basis von Information zu steuern, die von dem ersten Durchflussmesser (701), dem zweiten Durchflussmesser (701') oder dem dritten Durchflussmesser (701") bereitgestellt wird, um die Dosierung des alkalischen Detergens und des Wasserstoffperoxids nur dann wiederherzustellen, wenn ein Bediener die Anweisung ausführt, den Waschzyklus von einer Steuertafel der Waschvorrichtung zu starten.

9. Vorrichtung nach Anspruch 8, ferner umfassend einen Spülkreislauf zum Spülen der Tanks, wobei das Neutralisationsmittel an die Waschkammer mittels des Spülkreislaufes geliefert wird.

10. Vorrichtung nach Anspruch 9, wobei der Spülkreislauf ferner umfasst:
- einen Druckregler an einem Einlass der Zufuhrleitung des Spülkreislaufs;
- einen Druckschalter (741) an einem Einlass der Zufuhrleitung des Spülkreislaufs;
- einen Durchflussmesser an einem Einlass der Zufuhrleitung des Spülkreislaufs.

11. Vorrichtung nach Anspruch 8, ferner umfassend einen Spülkreislauf, der direkt von einer Wasserleitung und bei einem Druck der Wasserleitung versorgt wird.

12. Vorrichtung nach Anspruch 8, ferner umfassend einen Spülkreislauf, der mindestens einen Tank (011R) zum Spülen von Wasser und zum Aufnehmen von Druck von einer Spülpumpe umfasst.

## Revendications

1. Procédé de nettoyage d'un ou de plusieurs réservoirs destinés à contenir des animaux aquatiques, le procédé consistant à :
- insérer un ou plusieurs réservoirs pour animaux aquatiques à nettoyer dans une chambre de nettoyage d'un appareil de nettoyage ;
- fournir à la chambre de nettoyage une solution de nettoyage, la solution de nettoyage comprenant un détergent alcalin en combinaison avec du peroxyde d'hydrogène, le détergent alcalin est exempt de tensioactifs, de phosphates et de chlore ;
- fournir un agent neutralisant à la chambre de nettoyage, l'agent neutralisant est exempt de tensioactifs, de phosphates et de chlore pour rétablir un pH souhaité d'une solution de nettoyage résiduelle dans la chambre de nettoyage ;
- fournir de l'eau de rinçage à la chambre de nettoyage pour rincer les réservoirs.

2. Procédé de nettoyage de réservoirs destinés à contenir des animaux aquatiques selon la revendication 1, dans lequel la solution de nettoyage est une solution aqueuse comprenant un détergent alcalin à une concentration de 0,8 %, en combinaison avec du peroxyde d'hydrogène dans une proportion de 30 à 35 % en solution à 0,5 %.

3. Procédé de nettoyage de réservoirs destinés à contenir des animaux aquatiques selon la revendication 2, dans lequel le détergent alcalin est l'hydroxyde de potassium.

4. Procédé de nettoyage de réservoirs destinés à contenir des animaux aquatiques selon la revendication 3, dans lequel le détergent alcalin est l'hydroxyde de potassium dans une proportion de 20 à 40 %.

5. Procédé de nettoyage de réservoirs destinés à contenir des animaux aquatiques selon la revendication 1, dans lequel pendant l'étape de nettoyage, la solution de nettoyage possède une température entre 60 °C et 85 °C.

6. Procédé de nettoyage de réservoirs destinés à contenir des animaux aquatiques selon la revendication 1, dans lequel pendant l'étape de rinçage, l'eau de rinçage possède une température de 85 °C.

7. Procédé de nettoyage de réservoirs destinés à contenir des animaux aquatiques selon la revendication 1, dans lequel pendant l'étape de neutralisation, l'agent neutralisant est à une température de 85 °C.

8. Appareil de nettoyage pour le nettoyage de réservoirs destinés à contenir des animaux aquatiques selon un procédé selon l'une des revendications 1 à 6, l'appareil comprenant :
- au moins une chambre de nettoyage dans laquelle un ou plusieurs réservoirs de nettoyage sont positionnés ;
- au moins une première pompe d'alimentation (310W1) pour fournir un détergent alcalin à la chambre de nettoyage, la première pompe d'alimentation (310W1) étant munie d'un premier débitmètre (701) pour déterminer la quantité du détergent alcalin fournie à un bain de nettoyage ;
- au moins une deuxième pompe d'alimentation (310W1') pour fournir du peroxyde d'hydrogène à la chambre de nettoyage, la deuxième pompe d'alimentation (310W1') étant munie d'un deuxième débitmètre (701') pour déterminer la quantité du peroxyde d'hydrogène fournie au bain de nettoyage ;
- au moins une troisième pompe d'alimentation (313) pour fournir un agent neutralisant à la chambre de nettoyage, la troisième pompe d'alimentation (313) étant munie d'un troisième débitmètre (701") pour déterminer la quantité de l'agent neutralisant fournie, l'appareil comprenant en outre une unité de commande programmable configurée pour détecter une concentration du détergent alcalin et de l'agent neutralisant dans des solutions aqueuses de nettoyage et de neutralisation, respectivement, dans le bain de nettoyage afin de restaurer la concentration à la fin d'un cycle de nettoyage, l'unité de commande programmable de la machine de nettoyage étant programmée pour commander une ou plusieurs de la première pompe d'alimentation (310W1), de la deuxième pompe d'alimentation (310W1') ou de la troisième pompe d'alimentation (313) sur la base d'informations fournies par le premier débitmètre (701), le deuxième débitmètre (701') ou le troisième débitmètre (701") afin de restaurer le dosage du détergent alcalin et du peroxyde d'hydrogène uniquement lorsqu'un opérateur exécute l'instruction de démarrer le cycle de nettoyage à partir d'un panneau de commande de l'appareil de nettoyage.

9. Appareil selon la revendication 8 comprenant en outre un circuit de rinçage pour rincer les réservoirs, l'agent neutralisant étant fourni à la chambre de nettoyage au moyen du circuit de rinçage.

10. Appareil selon la revendication 9 dans lequel le circuit de rinçage comprend en outre :
un régulateur de pression à une entrée de la conduite d'alimentation du circuit de rinçage ;
- un pressostat (741) à une entrée de la conduite d'alimentation du circuit de rinçage ;
- un débitmètre à une entrée de la conduite d'alimentation du circuit de rinçage.

11. Appareil selon la revendication 8 comprenant en outre un circuit de rinçage alimenté directement par un réseau d'approvisionnement en eau et à une pression du réseau d'approvisionnement en eau.

12. Appareil selon la revendication 8 comprenant en outre un circuit de rinçage comprenant au moins un réservoir (011R) pour de l'eau de rinçage et recevant de la pression à partir d'une pompe de rinçage.
